# EUROPÄISCHE PATENTANMELDUNG

(11) **EP 2 372 000 A1**
(43) Veröffentlichungstag der Anmeldung: **05.10.2011**
(21) Anmeldenummer: 11400023.5
(22) Anmeldetag: 25.03.2011
(51) Int. Cl.: D03D 3/02, F16L 11/02, F16L 11/12, D03D 25/00, D03D 41/00

(54) **Gewebter Vierkantschlauch sowie Verfahren und Vorrichtung zur Herstellung desselben**

(30) Priorität: 31.03.2010 DE 102010013811
(71) Anmelder: Sächsisches Textilforschungsinstitut e.V., 09125 Chemnitz (DE)
(72) Erfinder: Arnold, Rolf, 01257 Dresden (DE); Helbig, Reinhard, 09353 Oberlungwitz (DE); Stopp, Jens, 08371 Glauchau (DE); Strauß, Wielfried, 08371 Glauchau (DE)

(57) **Zusammenfassung**

Die Erfindung betrifft einen gewebten Vierkantschlauch mit quadratischem oder rechteckigem Querschnitt, der z.B. als Halbzeug für faserverstärkte Kunststoffe oder als Umhüllung für Dichtungsmaterial eingesetzt werden kann. Das Verfahren und die Vorrichtung ermöglichen eine Herstellung als Hohlschlauch oder als Kern- Mantel-Struktur, wobei beliebiges Füllmaterial wie z.B. Fasern, Schüttgut oder starre Körper eingebracht werden können.

## Beschreibung

Die Erfindung betrifft einen gewebten Vierkantschlauch mit quadratischem oder rechteckigem Querschnitt, der z.B. als Halbzeug für faserverstärkte Kunststoffe oder als Umhüllung für Dichtungsmaterial eingesetzt werden kann. Das Verfahren und die Vorrichtung ermöglichen eine Herstellung als Hohlschlauch oder als Kern- Mantel- Struktur, wobei beliebiges Füllmaterial wie z.B. Fasern, Schüttgut oder starre Körper eingebracht werden können.

Gewebte Schläuche werden gegenwärtig auf Rundwebmaschinen oder Flachwebmaschinen hergestellt. Gewebte Schläuche von 10 - 180 mm Durchmesser werden z.B. von der Fa. HKO angeboten (www.hko.de). Weitere Anbieter sind z.B. die Firmen J.H. vom Baur (www.produktpilot.com) oder Frenzelit (www.frenzelit.com). Eine Vierkantstruktur für gewebte Schläuche kann nur durch eine nachfolgende Formgebung erfolgen, wobei der umlaufende Schuss im Kantenbereich im rechten Winkel geknickt werden muss, was bei ungenügender Fixierung zu einem Rücksprung und damit zu einem Verlust der Form führt. Beim Einsatz von Naturfasern muss die Formgebung und -haltung durch Versteifungsmittel erfolgen.

In der DE PS 38 05 502 C1 wird ein biegsamer, durch schraubenlinienförmiges Wickeln hergestellter Schlauch vorgeschlagen, der einen rechteckigen Querschnitt aufweist. Der Schlauch wird aus mindestens einem Metallband gewickelt und für den Transport gasförmiger Medien eingesetzt. Das Patent liefert keinerlei Hinweise zur Herstellung eines gewebten Vierkantschlauches.

Der Erfindung liegt die Aufgabe zuzugrunde, einen gewebten Vierkantschlauch bereit zu stellen, der an seinen Kanten scharnierartige Verbindungen besitzt, wodurch eine dauerhafte Formhaltung auch ohne Fixierung ermöglicht werden soll, weil jede Seite des Schlauchgewebes durch getrennte Schussfadensysteme gebildet wird. Die Webeinrichtung soll mit Schusseintragsnadeln, bzw. Greifern arbeiten, die in der Kombination mit einem neuen Fachbildungsprozess eine Gewebeherstellung mit hoher Produktivität ermöglicht.

Erfindungsgemäß wird die Aufgabe dadurch gelöst, dass das Vierkantgewebe vier getrennte Gewebeseiten A, B, C, D (Figuren 14 und 15) besitzt, die aus den Kettfadensystemen, d.h. den mit 6 und 7; 8 und 9; 10 und 11 sowie 12 und 13 gekennzeichneten Fadenscharen bestehen und mit den Doppelschüssen 26 verbunden werden, wobei die Doppelschüsse im Bereich der Kanten gelenkartig durch eine Maschenstruktur entsprechend Einzelheit X (Figur 16) verbunden sind. Die Form der Vierkantstruktur kann durch Variation des Kettfadeneinzuges und der Schussfadenspannung verändert werden.

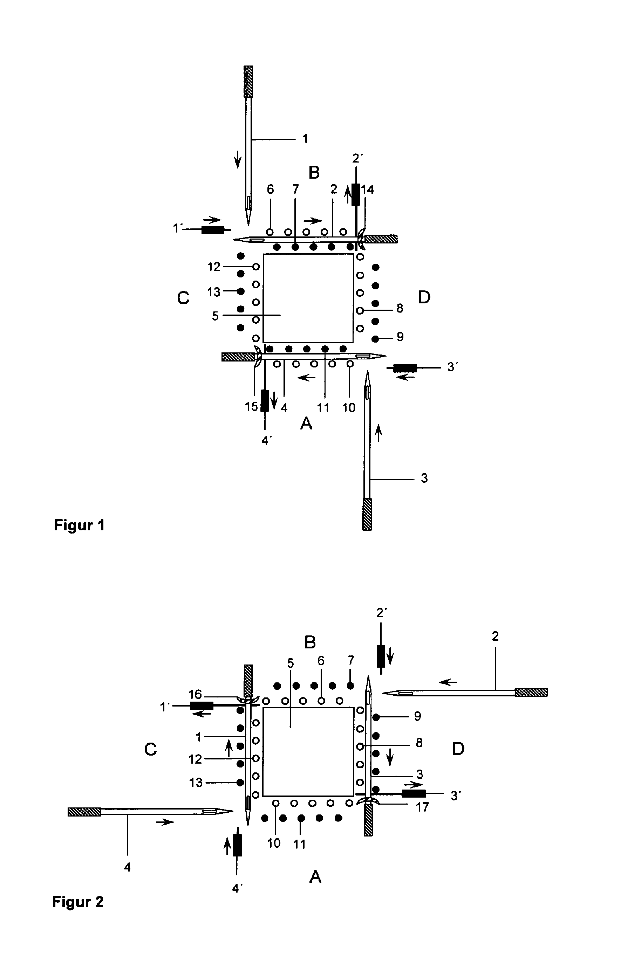

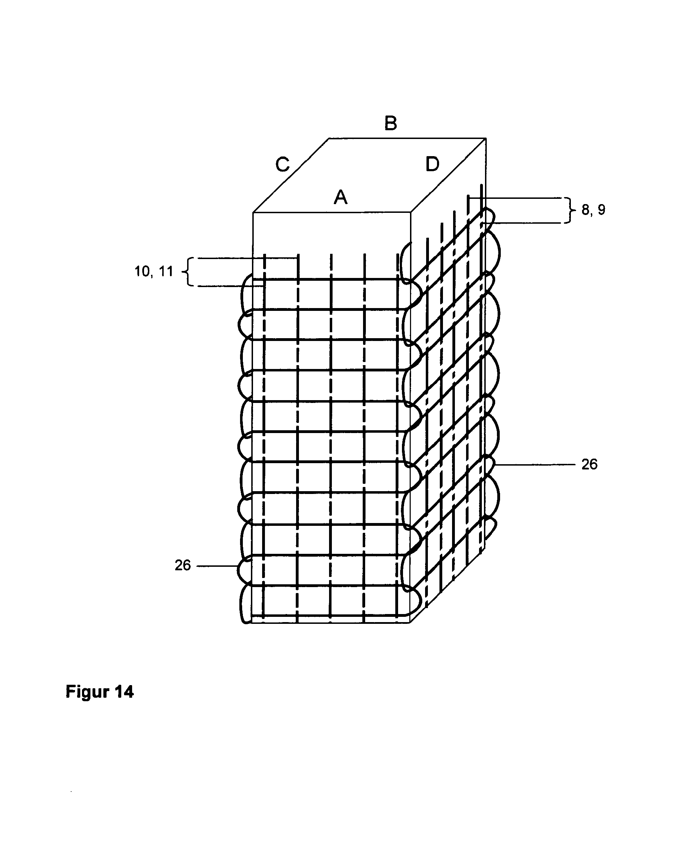

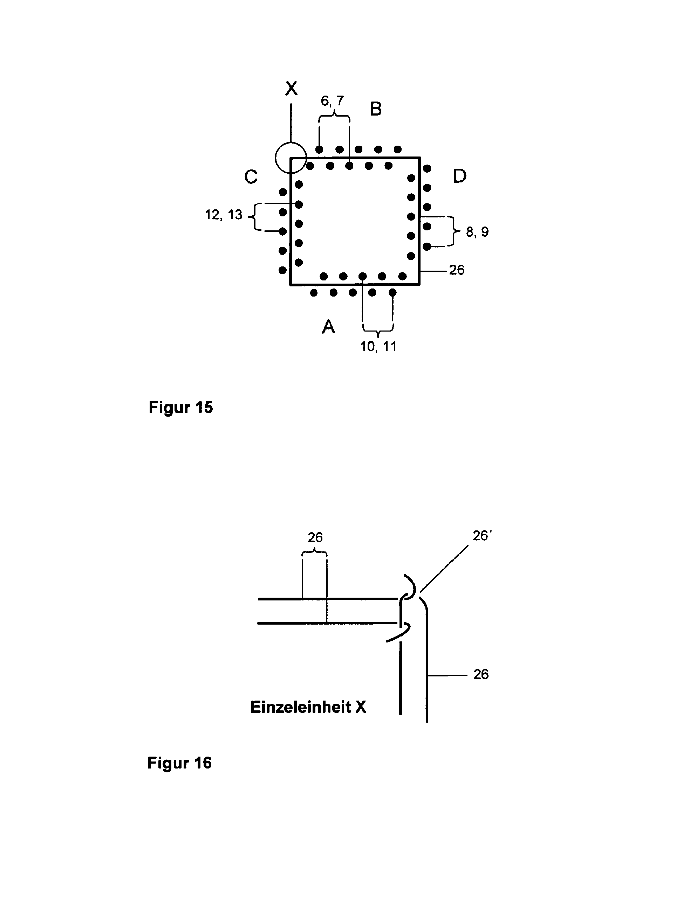

Zur Herstellung des Vierkantgewebes sind um ein Führungsrohr 5 (siehe Figuren 1 bis 4) vier Schusseintragsnadeln 1 bis 4 angeordnet, die jeweils paarweise gleichzeitig einen Doppelschuss 26 (Figur 14) eintragen, wobei immer zwei gegenüberliegende Schusseintragsnadeln gleichzeitig arbeiten. Kurz vor der rückwärtigen Bewegung der Schusseintragsnadeln 2 und 4 bzw. 1 und 3 (Figuren 1 bis 4) wird die Fadenschlaufe des jeweiligen Doppelschusses von der benachbarten Schusseintragsnadel aufgenommen. Die Fadenschlaufen 14 und 15 bzw. 16 und 17 (Figuren 1 bis 4) wandern durch die Bewegung der Schusseintragsnadeln nach hinten (Figuren 1 bis 4 und 13), wobei diese dabei in die jeweils gegenüberliegenden geöffneten Fächer eindringen. Damit die schräg nach unten laufenden Enden der Schussfadenschlaufen die Kettfäden nicht Zusammenschieben, sind Hilfsnadeln 1' bis 4' vorgesehen, die eine Bewegung in Richtung Führungsrohr ausführen und die Fadenschlaufen in Ihrer Lage sichern. Bei der Rückwertsbewegung schlagen die Schussfadenschlaufen von den Spitzen der Schusseintragsnadeln ab und Verschlingen sich mit den Fäden der benachbarten Schusseintragsnadeln (Figur 16). Durch das wechselweise Zusammenspiel der Schusseintragsnadeln ergibt sich folgende Lage der Fadenschlaufen:
- Figur 1: Schussfadenschlaufe 14 von Schusseintragsnadel 3 auf Schusseintragsnadel 2, Schusseintragsschlaufe 15 von Schusseintragsnadel 1 auf Schusseintragsnadel 4,
- Figur 2: Schusseintragsschlaufe 16 von Schusseintragsnadel 2 auf Schusseintragsnadel 1, Schusseintragsschlaufe 17 von Schusseintragsnadel 4 auf Schusseintragsnadel 3

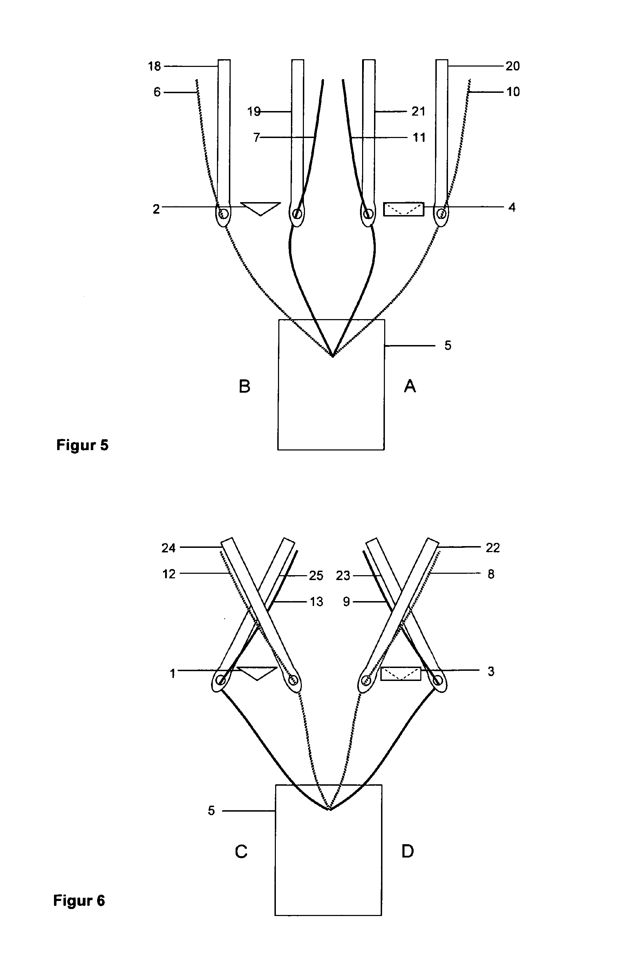

Die Fachbildung erfolgt durch Fachbildungskämme 18 bis 25 (siehe Figuren 5 bis 12), die oberhalb der Schusseintragsnadeln angeordnet sind. Für jede Seite des Vierkantgewebes werden die Kettfäden über innere und äußere Fachbildungskämme zugeführt, die zur Herstellung einer Leinwandbindung scherenartig bewegt werden, wodurch der Fachwechsel realisiert wird. Die Schusseintragsnadeln 1 bis 4 durchdringen die gebildeten Fächer (Figuren 1 bis 12) und tragen einen Doppelschuss ein, der von den Spitzen der benachbarten Schusseintragsnadeln gefangen wird. Nachdem die jeweils gegenüberliegenden Schusseintragsnadeln 2 und 4 bzw. 1 und 3 (Figuren 1 bis 4) die Fächer verlassen haben, erfolgt der Fachwechsel durch scherenartige Bewegung der Fachbildungskämme 18 bis 25 (Figuren 5 und 6). Der schrittweise Bewegungsablauf zur Herstellung einer Leinwandbindung geht aus den Figuren 5 bis 12 hervor. Beim Positionswechsel der inneren bzw. äußeren Fachbildungskämme bewegen sich die Kämme mit einer konträren Schwingbewegung durch die Gassen der kammartig angeordneten Fadenleger, die von der Ausführung her bekannten Lochnadelfassungen von Kettenwirkmaschinen entsprechen.

Die Erfindung soll nachfolgend an einem Ausführungsbeispiel näher erläutert werden. Es zeigen:
- Figuren 1 bis 4 eine Prinzipdarstellung der Draufsicht auf die Webeinrichtung für ein komplettes Arbeitsspiel zur Herstellung eines Vierkantschlauches mit Leinwandbindung und
- Figuren 5 bis 12 eine Prinzipdarstellung der Seitenansichten mit der Position und der Anordnung der Fachbildungsorgane für ein komplettes Arbeitsspiel zur Herstellung einer Leinwandbindung
wobei folgende Teile bezeichnet sind:
- 1 bis 4: Schusseintragsnadeln
- 1'bis 4': Hilfsnadeln
- 5: Führungsrohr
- 6 und 7: Kettfäden vom Websystem Seite B
- 8 und 9: Kettfäden vom Websystem Seite D
- 10 und 11: Kettfäden vom Websystem Seite A
- 12 und 13: Kettfäden vom Websystem Seite C
- 14: Schussfadenschlaufe von Schusseintragsnadel 3 auf Schusseintragsnadel 2
- 14' bis 17': Enden der Fadenschlaufen 14-17
- 15: Schussfadenschlaufe von Schusseintragsnadel 1 auf Schusseintragsnadel 4
- 16: Schussfadenschlaufe von Schusseintragsnadel 2 auf Schusseintragsnadel 1
- 17: Schussfadenschlaufe von Schusseintragsnadel 3 auf Schusseintragsnadel 3
- 18: äußerer Fadenbildungskamm für Websystem Seite B
- 19: innerer Fadenbildungskamm für Websystem Seite B
- 20: äußerer Fadenbildungskamm für Websystem Seite A
- 21: innerer Fadenbildungskamm für Websystem Seite A
- 22: äußerer Fadenbildungskamm für Websystem Seite D
- 23: innerer Fadenbildungskamm für Websystem Seite D
- 24: äußerer Fadenbildungskamm für Websystem Seite C
- 25: innerer Fadenbildungskamm für Websystem Seite C
- 26: Schussfaden
- 26': gelenkartiger Verbund der Schussfäden im Kantenbereich
- 26": aus Schusseintragsnadeln austretende Schussfadenabschnitte
- 27: Schaft
- 28: Lager für schwingende Bewegung der Schusseintragsnadeln.

Die zugehörigen Einzeldarstellungen zeigen:
- Figur 5: Position der Fachbildungskämme der Seiten A und B für Figur 1 von der Seite C aus gesehen,
- Figur 6: Position der Fachbildungskämme der Seiten C und D für Figur 1 von der Seite A aus gesehen,

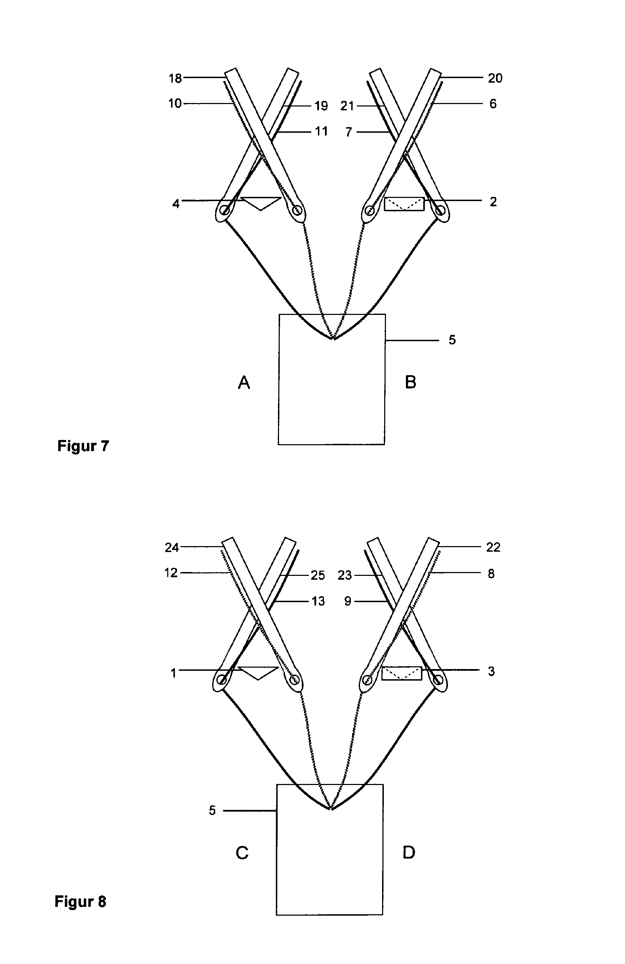

- Figur 7: Position der Fachbildungskämme der Seiten A und B für Figur 2 von der Seite D aus gesehen,
- Figur 8: Position der Fachbildungskämme der Seiten C und D für Figur 2 von der Seite A aus gesehen,

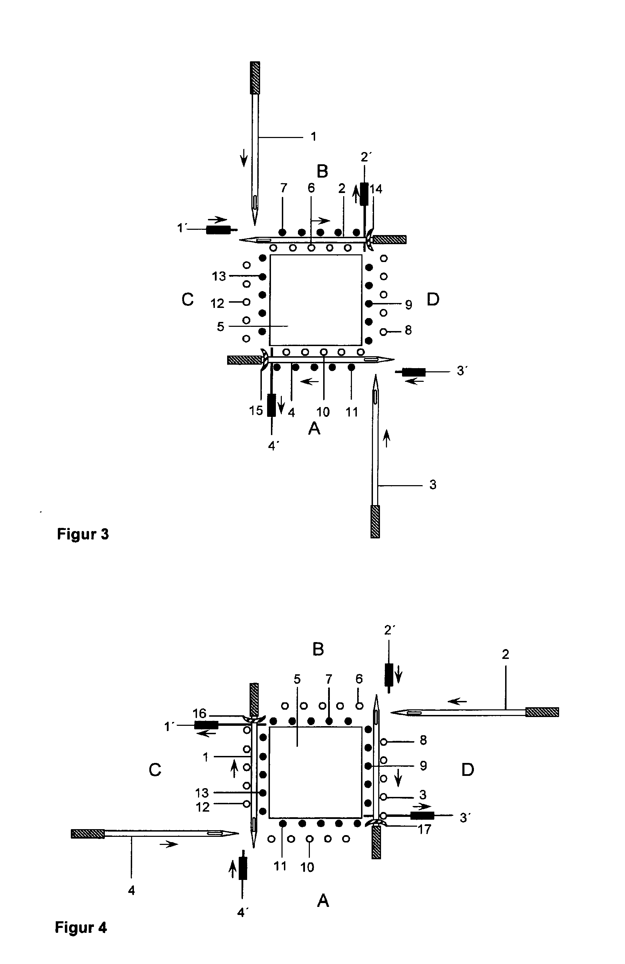

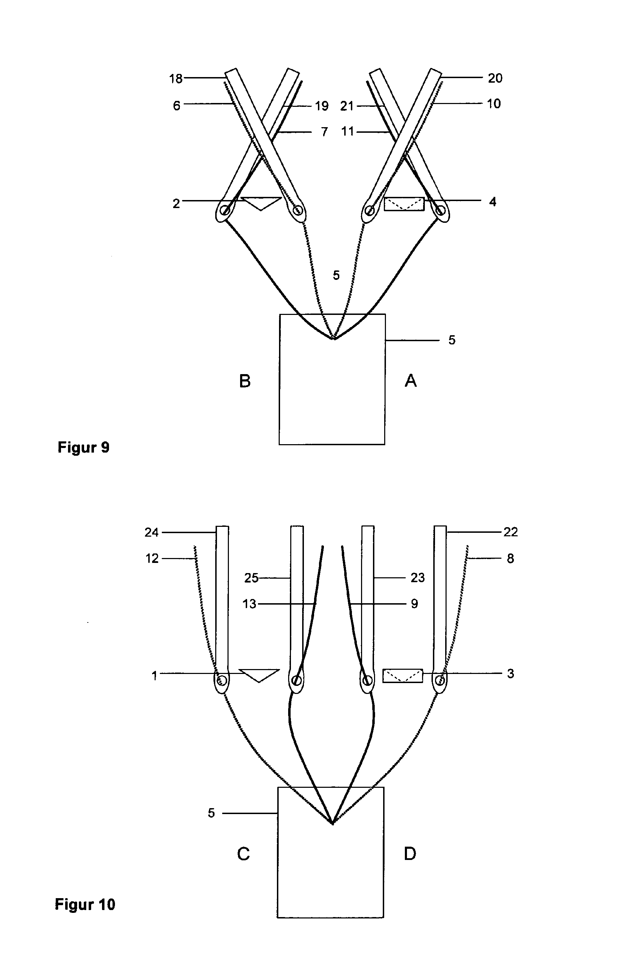

- Figur 9: Position der Fachbildungskämme der Seiten A und B für Figur 3 von der Seite C aus gesehen,
- Figur 10: Position der Fachbildungskämme der Seiten C und D für Figur 3 von der Seite A aus gesehen,

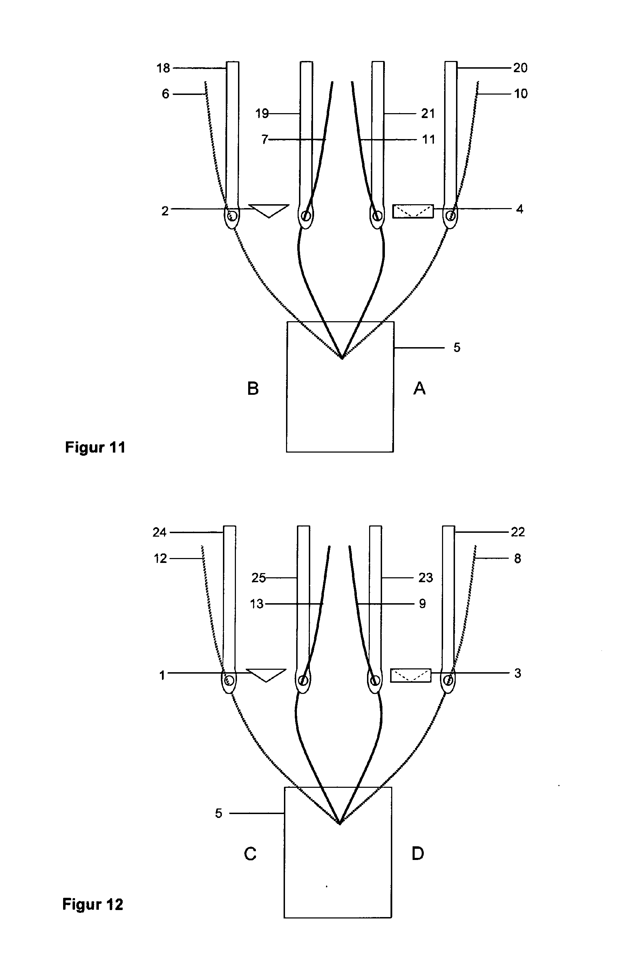

- Figur 11: Position der Fachbildungskämme der Seiten A und B für Figur 4 von der Seite C aus gesehen,
- Figur 12: Position der Fachbildungskämme der Seiten C und D für Figur 4 von der Seite A aus gesehen,

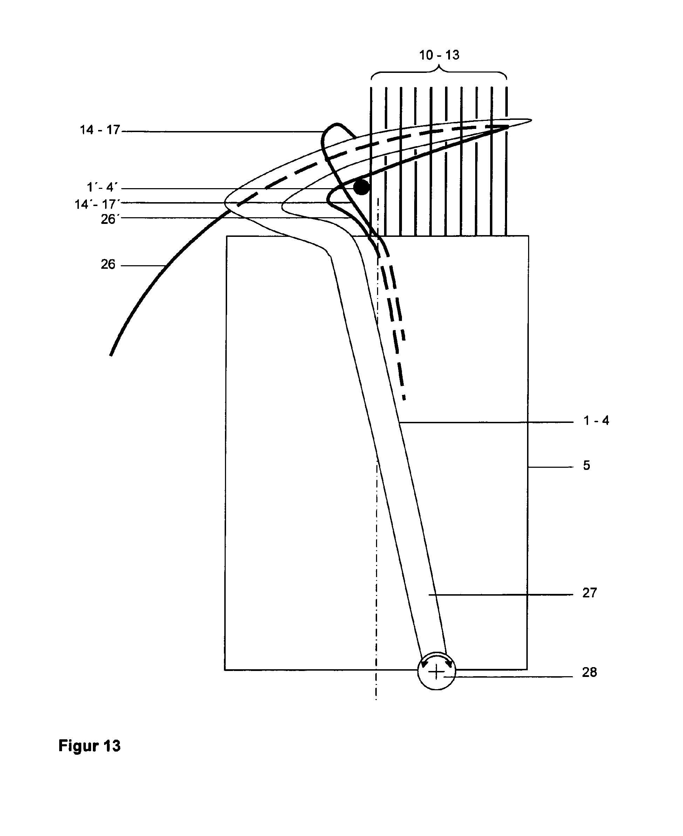

- Figur 13: Prinzipdarstellung einer Schusseintragsnadel und Anordnung am Führungsrohr,
- Figur 14: Prinzipdarstellung eines gewebten Vierkantschlauches mit Verbindung der Gewebeseiten A/B durch Schussfadenschlaufen,
- Figur 15: Vereinfachte Schnittdarstellung quer zur Längsrichtung eines gewebten Vierkantschlauches,
- Figur 16: Verbindung der Schussfadenschlaufen im Kantenbereich.

Zur Herstellung des gewebten Vierkantschlauches sind um ein Führungsrohr 5 vier Schusseintragsnadeln 1 bis 4 angeordnet, die unterhalb des Schaftes 27 im Lager 28 schwingend gelagert sind (Figur 13). Die Realisierung der Schwingbewegung erfolgt über ein nicht dargestelltes, bekanntes Antriebssystem. Die Lagerung 28 ist versetzt zur Mittellängsachse des Führungsrohres angeordnet, um die Übernahme der Schussfadenschlingen von den jeweils benachbarten Schusseintragsnadeln zu ermöglichen. Oberhalb der Schusseintragsnadeln sind Fadenführerkämme 18 bis 25 angeordnet, die die Kettfäden 6 bis 13 führen und die Webfächer bilden. Jeweils gegenüberliegende Schusseintragsnadeln bewegen sich gemeinsam und tragen einen Doppelschuss ein, wobei im Kantenbereich die Schlaufe des Doppelschusses von der Spitze der benachbarten Schusseintragsnadel aufgenommen wird und als Schussfadenschlaufe 14 bis 17 (Figuren 1 bis 4) auf den Arbeitszonen der Schusseintragsnadeln in Richtung Schaft 27 (Figur 13) wandert. Das komplette Arbeitsspiel ist in den Figuren 1 bis 4 dargestellt. Die Figuren 5 bis 12 zeigen die Anordnung und Positionen der Fadenbildungskämme dazu.

## Patentansprüche

1. Gewebter Vierkantschlauch, **dadurch gekennzeichnet, dass** vier räumlich angeordnete Gewebeseiten A, B, C, D aus mehreren, aber wenigstens acht Kettfadensystemen (6) bis (13) bestehen, die je Seite mit Doppelschüssen (26) zu einem Gewebe verbunden sind, wobei diese im Kantenbereich einen gelenkartigen Verbund (26') bilden.

2. Gewebter Vierkantschlauch, **dadurch gekennzeichnet, dass** der Vierkantschlauch eine Kernfüllung besitzt.

3. Gewebter Vierkantschlauch, **dadurch gekennzeichnet, dass** der Vierkantschlauch unterschiedlich breite Seitenlängen (A, B und C, D) besitzt.

4. Gewebter Vierkantschlauch, **dadurch gekennzeichnet, dass** der Vierkantschlauch gleiches Fadenmaterial oder Materialkombinationen in den Kettfadensystemen aufweist, die aus organischem, anorganischem, natürlichen polymerem und/oder synthetischen polymerem Fadenmaterial, insbesondere Aramidfaser, Basaltfaser, Glasfaser, Kohlenstofffaser und/oder Bikomponenten-Fasermaterialien aus diesen benannten Faserstoffen bestehen.

5. Verfahren zur Herstellung eines gewebten Vierkantschlauches nach den Ansprüchen 1 bis 4 unter Verwendung von Schusseintragsnadeln für den Eintrag von Doppelschüssen **dadurch gekennzeichnet, dass** in jeweils gegenüberliegenden Seiten des Vierkantschlauches gleichzeitig in entgegen gesetzter Richtung durch Schusseintragsnadeln (1) und (3) bzw. (2) und (4) Schussfäden (26) als Doppelschuss eingetragen werden, wobei die Schlaufen der Doppelschüsse (14) bis (17) von benachbarten Schusseintragsnadeln aufgenommen werden und zusammen mit den Schussfäden dieser einen gelenkartigen Verbund (26') im jeweiligen Kantenbereich bilden.

6. Verfahren zur Herstellung eines gewebten Vierkantschlauches nach Anspruch 5 unter Verwendung von Schusseintragsnadeln für den Eintrag von Doppelschüssen **dadurch gekennzeichnet, dass** die Fachbildung durch äußere und innere Fachbildungskämme (18) bis (25) erfolgt, wobei die Schusseintragsnadeln (2) und (4) bzw. (1) und (3) gegenüberliegender Webseiten nach erfolgtem Fachwechsel die Fächer im Bereich der Fadenaustrittsöffnung der vorderen bzw. der hinteren Fachbildungskämme wechselweise durchdringen.

7. Verfahren zur Herstellung eines gewebten Vierkantschlauches nach den Ansprüchen 5 bis 6 unter Verwendung von Schusseintragsnadeln für den Eintrag von Doppelschüssen **dadurch gekennzeichnet, dass** die Fachbildung und Führung der Kettfäden durch konträr schwenkbare innere und äußere Fachbildungskämme (18) bis (25) erfolgt.

8. Verfahren zur Herstellung eines gewebten Vierkantschlauches nach einem der Ansprüchen 5 bis 7 mit Schusseintragsnadeln zum Eintrag von Doppelschüssen in die Fächer von Kettfäden **dadurch gekennzeichnet, dass** Hilfsnadeln (1') bis(4') die Enden (14)' bis (17') der schräg nach unten laufenden Schusseintragsschlaufen bei der Vorwärtsbewegung der Schusseintragsnadeln im Abstand zu den Kettfäden gehalten werden.

9. Vorrichtung zur Herstellung eines gewebten Vierkantschlauches nach den Ansprüchen 1 bis 4 und dem Verfahren zur Herstellung nach den Ansprüchen 5 bis 8 mit Schusseintragsnadeln zum Eintrag von Doppelschüssen in die Fächer von Kettfäden **dadurch gekennzeichnet, dass** vier Schusseintragsnadeln (1) bis (4) um ein Führungsrohr (5) angeordnet sind, wobei die nach unten zeigenden Schäfte (27) der Schusseintragsnadeln Lager (28) für eine schwingende Bewegung besitzen, die versetzt zur gedachten Mittellängsachse des Führungsrohres so angeordnet sind, dass die Lagerung gegenüberliegender Schusseintragsnadeln jeweils auf der gegenüberliegenden Seite der Mittellängsachse ist.

10. Vorrichtung zur Herstellung eines gewebten Vierkantschlauches nach Anspruch 9 mit Schusseintragsnadeln zum Eintrag von Doppelschüssen in die Fächer von Kettfäden **dadurch gekennzeichnet, dass** die Schusseintragsnadeln so angetrieben werden, dass jeweils gegenüberliegende Schusseintragsnadeln gleichzeitig, aber um 180° versetzt zu den benachbarten Nadeln arbeiten.

11. Vorrichtung zur Herstellung eines gewebten Vierkantschlauches nach den Ansprüchen 9 bis 10 mit Schusseintragsnadeln zum Eintrag von Doppelschüssen in die Fächer von Kettfäden **dadurch gekennzeichnet, dass** oberhalb der Schusseintragsnadeln (1) bis (4) Fachbildungskämme (18) bis (25) so angeordnet und angetrieben sind, dass die Kämme (18) und (19) bzw. (20) und (21) sowie (22) und (23) bzw. (24) und (25) der gegenüberliegenden Webseiten gleichzeitig scherenartig bewegt werden und Fächer für den Schusseintrag bilden.

12. Vorrichtung zur Herstellung eines gewebten Vierkantschlauches nach den Ansprüchen 9 bis 11 mit Schusseintragsnadeln zum Eintrag von Doppelschüssen in die Fächer von Kettfäden **dadurch gekennzeichnet, dass** die jeweils außerhalb der Fächer stehenden Schusseintragsnadeln (1) und (3) (Figur 1) bzw. (2) und (4) (Figur 2) mit ihren Spitzen unterhalb der Spitzen der jeweils sich im Fach befindlichen Schusseintragsnadeln (2) und (4) (Figur 1) bzw. (1) und (3) (Figur 2) angeordnet sind.

13. Vorrichtung zur Herstellung eines gewebten Vierkantschlauches nach den Ansprüchen 9 bis 12 mit Schusseintragsnadeln zum Eintrag von Doppelschüssen in die Fächer von Kettfäden **dadurch gekennzeichnet, dass** den Schusseintragsnadeln (1) bis (4) Hilfsnadeln (1') bis (4') zugeordnet sind, die im annähernd rechten Winkel zu den Schusseintragsnadeln beweglich sind.
